# EUROPEAN PATENT SPECIFICATION

(11) **EP 3 562 178 B1**
(45) Date of publication and mention of the grant of the patent: **07.04.2021**
(21) Application number: 18882288.6
(22) Date of filing: 14.02.2018
(51) Int. Cl.: H04W 4/70, H04W 28/02, H04W 52/02, H04W 68/02, H04W 72/08

(54) **PAGING METHOD AND DEVICE**
FUNKRUFVERFAHREN UND -VORRICHTUNG
PROCÉDÉ ET DISPOSITIF DE RADIOMESSAGERIE

(43) Date of publication of application: 30.10.2019
(60) Divisional application: 21151748.7
(73) Proprietor: GUANGDONG OPPO MOBILE TELECOMMUNICATIONS CORP., LTD., Wusha, Chang'an Dongguan, Guangdong 523860 (CN)
(72) Inventor: LIU, Jianhua, Dongguan Guangdong 523860 (CN)
(74) Representative: Manitz Finsterwald Patent- und Rechtsanwaltspartnerschaft mbB
(86) International application number: PCT/CN2018/076877
(87) International publication number: WO 2019/157736

(56) References cited:
- WO-A1-2016/190711
- CN-A- 102 244 856
- CN-A- 102 572 782
- CN-A- 108 401 500
- US-A1- 2018 007 563
- US-B1- 8 331 960

## Description

### TECHNICAL FIELD

Embodiments of the present disclosure relate to the field of communications, and in particular, to a paging method and device.

### BACKGROUND

In the existing communication system, after receiving a paging message transmitted by a network device, a terminal device immediately responds to the paging message of the network device. When the link quality of the terminal device is poor, the terminal device uses a higher power to respond to the paging message, that is, uses a higher power to reply with a paging response message. As a result, the power consumption of the terminal device is increased. Therefore, a paging method is needed to solve the above problem. Related technologies are known from US 2018/007562 A1 and WO2016/190711A1.

### SUMMARY

The invention is defined by the independent claims. Further embodiments are specified in the dependent claims. The embodiments of the present disclosure provide a paging method and device, which are beneficial to reducing the power consumption of a terminal device.

According to a first aspect, a paging method is provided, which includes that, a terminal device receives a paging message transmitted by an access network device, wherein the paging message includes first indication information, and the first indication information is used to indicate that delay in return of a paging response message is allowed; and the terminal device determines whether to delay returning the paging response message according to a current link link quality and a preset link quality threshold.

### BRIEF DESCRIPTION OF DRAWINGS

FIG. 1 illustrates a schematic diagram of a communication system according to an embodiment of the present disclosure.
FIG. 2 illustrates a schematic flowchart of a paging method according to an embodiment of the present disclosure.
FIG. 3 illustrates a schematic flowchart of a paging method according to another embodiment of the present disclosure.
FIG. 4 illustrates a schematic flowchart of a paging method according to yet another embodiment of the present disclosure.
FIG. 5 illustrates a schematic interaction diagram of a paging method according to an embodiment of the present disclosure.
FIG. 6 illustrates a schematic diagram of a paging device according to an embodiment of the present disclosure.
FIG. 7 illustrates a schematic diagram of a paging device according to an embodiment of the present disclosure.
FIG. 8 illustrates a schematic diagram of a paging device according to an embodiment of the present disclosure.
FIG. 9 illustrates a schematic diagram of a paging device according to an embodiment of the present disclosure.
FIG. 10 illustrates a schematic diagram of a paging device according to an embodiment of the present disclosure.
FIG. 11 illustrates a schematic diagram of a paging device according to an embodiment of the present disclosure.

### DETAILED DESCRIPTION

The technical solutions of the embodiments of the present disclosure may be applied to various communication systems such as a Global System of Mobile communication (GSM), a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, an LTE Time Division Duplex (TDD) system, a Universal Mobile Telecommunication System (UMTS), a Worldwide Interoperability for Microwave Access (WiMAX) communication system, or a future 5G system.

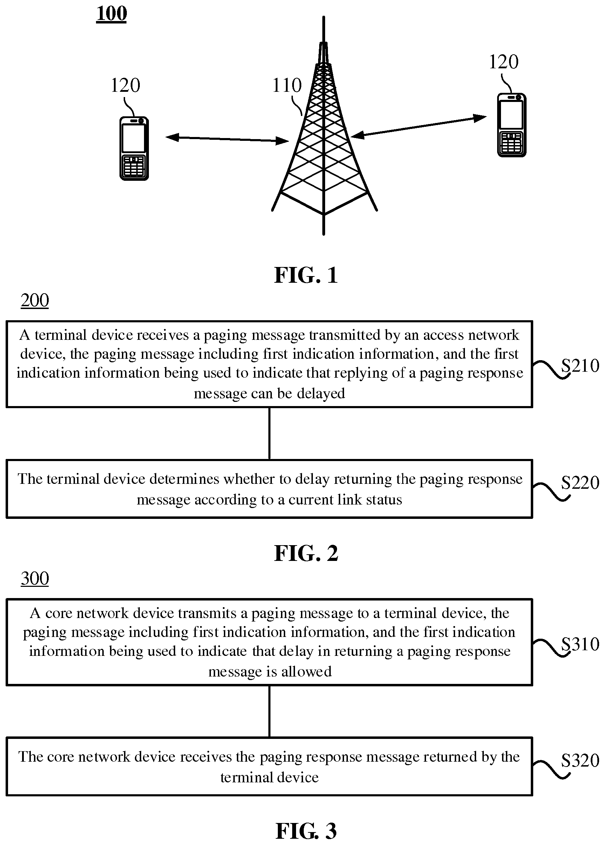

FIG. 1 illustrates a wireless communication system 100 applied in an embodiment of the present disclosure. The wireless communication system 100 may include a network device 110. The network device 100 may be a device communicating with a terminal device. The network device 100 may provide communication coverage for a specific geographic area and may communicate with terminal devices (e.g., User Equipment (UE)) located within the coverage area. The network device 100 may be a Base Transceiver Station (BTS) in the GSM system or the CDMA system, or may be a NodeB (NB) in the WCDMA system, or may be an Evolutional Node B (eNB or eNodeB) in the LTE system, or a wireless controller in a Cloud Radio Access Network (CRAN), or the network device may be a relay station, an access point, an in-vehicle device, a wearable device, a network side device in the future 5G network or a network device in a future evolved Public Land Mobile Network (PLMN).

The wireless communication system 100 further includes at least one terminal device 120 located within a coverage range of the network device 110. The terminal device 120 may be mobile or stationary. The terminal device 120 may be an access terminal, a UE, a user unit, a user station, a mobile radio station, a mobile station, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device having a wireless communication function, a computing device or other processing devices connected to a wireless modem, an in-vehicle device, a wearable device, a terminal device in the future 5G network, or a terminal device in the future evolved PLMN.

FIG. 2 illustrates a schematic flowchart of a paging method 200 according to an embodiment of the present disclosure. The method 200 may be performed by the terminal device in the communication system 100 illustrated in FIG. 1. As illustrated in FIG. 2, the method 200 may include the operations as follows.

At S210, a terminal device receives a paging message transmitted by an access network device. The paging message includes first indication information, and the first indication information is used to indicate that delay in return of a paging response message is allowed.

At S220, the terminal device determines whether to delay returning the paging response message according to a current link status.

It is to be understood that, the paging message may be a paging message from a core network device forwarded by an access network device. For example, when downlink data arrives, a core network node may transmit a paging message to a terminal device through an access network node, and instruct the terminal device to receive the downlink data.

Therefore, the core network device may configure whether the terminal device is allowed to delay returning the paging response message, so that the terminal device may determine whether to delay returning the paging response message according to a current link status or information such as whether there is data is to be transmitted.

For example, the terminal device may delay replying to the paging message if the current link quality is poor, so that immediate return of the paging response message at a large power can be avoided, which, otherwise, would increase the power consumption of the terminal device. The terminal device may wait to return a response message when the link quality becomes better.

The terminal device may determine that the current link quality is poor when the current link quality is lower than a preset quality threshold, or determine that the current link quality is good when the current link quality is higher than a preset quality threshold. The manner for determining the link quality is not limited in the embodiments of the present disclosure.

Alternatively, in some embodiments, the method 200 may further include the operations as follows.

In the case of determining to delay returning the paging response message, the terminal device determines a delay time of the paging response message.

For example, the paging message may include first time information for delaying returning the paging response message, so that the terminal device may determine a delay time of returning the paging response message according to the first time information.

Alternatively, the first time information is used to indicate a maximum delay duration for delaying returning the paging response message and/or a latest specific time for returning the paging response message.

For example, the terminal device may return a paging response message within a maximum delay duration indicated by the first time information. If the maximum delay duration is T₁, the terminal device may return the paging response message within the duration T₁ after receiving the paging message. For example, the terminal device may start a timer after receiving the paging message, the duration of the timer is T₁, and the terminal device may return the paging response message before the timer expires.

Alternatively, the terminal device may return the paging response message within a latest specific time indicated by the first time information. For example, if the specific time is t₁, the terminal device may return the paging response message before the specific time t₁ arrives.

Alternatively, in the embodiments of the present disclosure, during network registration, the core network device may configure the terminal device with second time information for delaying returning the paging response message, so that the terminal device may determine a delay time of the paging response message according to second time information.

Alternatively, in some embodiments, the second time information is used to indicate a maximum delay duration for delaying returning the paging response message and/or a latest specific time for returning the paging response message.

For example, the terminal device may return the paging response message within a maximum delay duration indicated by the second time information. If the maximum delay duration is T₂, the terminal device may return the paging response message within the duration T₂ after receiving the paging message. For example, the terminal device may start a timer after receiving the paging message, the duration of the timer is T₂, and the terminal device may return the paging response message before the timer expires.

Alternatively, the terminal device may return the paging response message within a latest specific time indicated by the first time information. For example, if the specific time is t₂, the terminal device may return the paging response message before the specific time t₂ arrives.

Alternatively, in some embodiments, the method 200 may further include the operations as follows.

The terminal device reports device type information to the core network device, the device type information being used to indicate that the terminal device is a terminal in a power saving mode or a terminal performing communication with a high delay.

The terminal device receives configuration information transmitted by the core network device, the configuration information being used to configure the terminal device with the second time information for delaying returning the paging response message.

That is, the core network device may configure the terminal device with the second time information for delaying returning the paging response message based on the device type information reported by the terminal device.

It is to be understood that, in the embodiments of the present disclosure, the priority of the first time information is higher than the priority of the second time information. If the first time information is not included in the paging message, the terminal device may determine a delay time for returning the paging response message according to the second time information. If the first time information is included in the paging message, the terminal device preferentially determines a delay time for returning the paging response message according to the first time information.

In the embodiments of the present disclosure, the core network device may be a CPF such as an AMF or an SMF, which is not limited in the embodiments of the present disclosure.

The paging method according to the embodiment of the present disclosure is described above in conjunction with FIG. 2, and the paging method according to the embodiment of the present disclosure is described below in conjunction with FIG. 3 from the perspective of a core network device. It is to be understood that, the description of the core network device and the description of the terminal device correspond to each other. A similar description may be seen from the above. To avoid repetition, details are not described herein.

FIG. 3 illustrates a schematic flowchart of a paging method 300 according to an embodiment of the present disclosure. The method 300 may be performed by a core network device in the communication system 100 illustrated in FIG. 1. As illustrated in FIG. 3, the method 300 may include the operations as follows.

At S310, a core network device transmits a paging message to a terminal device. The paging message includes first indication information, and the first indication information is used to indicate that delay in return of a paging response message is allowed.

At S320, the core network device receives the paging response message returned by the terminal device.

It is to be understood that, the paging message may be provided by the core network device and transmitted to the terminal device by an access network node. That is, the core network device may firstly transmit a paging message to the access network device, and then the access network device forwards the paging message to the terminal device. The paging message may include first indication information, so that the terminal device may determine, according to the received paging message, whether return of the paging response message can be delayed, and in the case that return of the paging response message can be delayed, the terminal device may determine whether to delay returning the paging response message according to information such as a current link status.

Alternatively, in the embodiments of the present disclosure, the paging message may further include first time information for delaying returning the paging response message.

Alternatively, in the embodiments of the present disclosure, the first time information may be used to indicate a maximum delay duration for delaying returning the paging response message and/or a latest specific time for returning the paging response message.
Alternatively, in the embodiments of the present disclosure, S320 may include the operations as follows.

The core network device receives the paging response message returned by the terminal device within a first duration or a first time. The first duration may be a maximum delay duration indicated by the first time information, or the first duration may be greater than the maximum delay duration indicated by the first time information. The first time may be the specific time indicated by the first time information, or the first time may be later than the specific time indicated by the first time information.

That is, the core network device may determine time for the terminal device to delay returning the paging response message according to the first time information configured for the terminal device, so that the paging response message returned by the terminal device can be received within the time range.

For example, the core network device may configure a timer according to the first time information, and the duration of the timer may be a maximum delay duration indicated by the first time information, or may be greater than the maximum delay duration indicated by the first time information, which will not be limited in the embodiments of the present disclosure, so that the core network device may receive the paging response message returned by the terminal device before the timer expires.

For example, a timeout of the timer may also be set. For example, the timeout may be a latest specific time indicated by the first time information, or may be later than the latest specific time indicated by the first time information, which will not be limited in the embodiments of the present disclosure, so that the core network device may receive the paging response message returned by the terminal device before the timer expires.

Alternatively, in some embodiments, the method 300 may further include the operations as follows.

The core network device receives device type information reported by the terminal device during network registration, the device type information being used to indicate that the terminal device is a terminal in a power saving mode or a terminal performing communication with a high delay.

The core network device configures the terminal device with second time information for delaying returning the paging response message.

Alternatively, in some embodiments, the second time information may be used to indicate a maximum delay duration for delaying returning the paging response message and/or a latest specific time for returning the paging response message.

Alternatively, in some embodiments, S320 may include the operations as follows.

The core network device receives the paging response message returned by the terminal device within a second duration or a second time. The second duration may be a maximum delay duration indicated by the second time information, or the second duration may be greater than the maximum delay duration indicated by the second time information. The second time may be the specific time indicated by the second time information, or the second time may be later than the specific time indicated by the second time information.

The specific implementation process may be seen from the related description of the foregoing embodiment, and details are not described herein.

Alternatively, in some embodiments, the core network device may be a CPF, and the method may further include the operations as follows.

The core network device receives second indication information transmitted by a UPF or a DSCP, the second indication information being used to indicate arrival of downlink data and/or permission of delay in transmitting downlink data.

That is, the CPF may transmit a paging message to the terminal device when determining the arrival of downlink data.

Alternatively, in some embodiments, the CPF may be an AMF or an SMF.

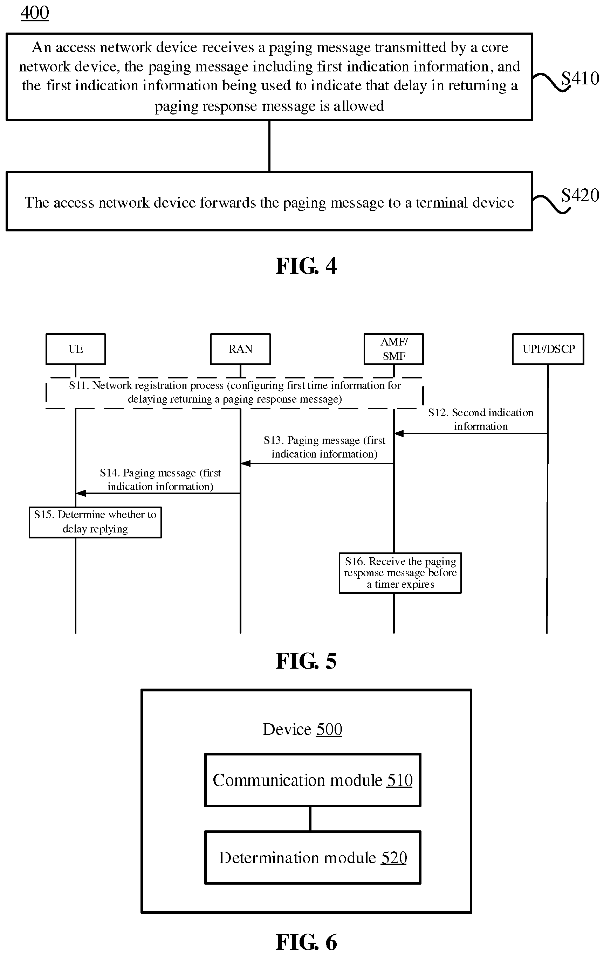

FIG. 4 illustrates a schematic flowchart of a paging method 400 according to an embodiment of the present disclosure. The method 400 may be performed by an access device in the communication system 100 illustrated in FIG. 1. As illustrated in FIG. 4, the method 400 may include the operations as follows.

At S410, an access network device receives a paging message transmitted by a core network device. The paging message includes first indication information, and the first indication information is used to indicate that delay in return of a paging response message is allowed.

At S420, the access network device forwards the paging message to a terminal device.

Alternatively, in some embodiments, the paging message may further include first time information for delaying returning the paging response message.

Alternatively, in some embodiments, the first time information may be used to indicate a maximum delay duration for delaying returning the paging response message and/or a latest specific time for returning the paging response message.

Alternatively, in some embodiments, the core network device may be a CPF.

Alternatively, in some embodiments, the CPF may be an AMF or an SMF.

FIG. 5 illustrates a schematic interaction diagram of a paging method 10 according to an embodiment of the present disclosure. The method 10 includes the operations as follows.

At S11, a terminal device is configured with first time information for delaying returning a paging response message according to a network registration process.

Specifically, the terminal device may report device type information to an AMF/SMF, where the device type information may be used to indicate that the terminal device is a terminal in a power saving mode or a high delay terminal, so that the AMF/SMF may configure the terminal device to delay returning the paging response message. The time information that the terminal device delays returning the paging response message may be the first time information.

Alternatively, the first time information may be carried in a message or signaling for communication between the terminal device and the core network device.

At S12, a UDP/DSCP transmits second indication information to the AMF/SMF. The second indication information may be used to indicate arrival of downlink data and/or permission of delay in transmitting downlink data, so that the AMF/SMF may be triggered to transmit a paging message to the terminal device.

At S13, the AMF/SMF transmits a paging message to a Radio Access Network (RAN). The paging message includes first indication information, and is used to indicate that delay in return of a paging response message is allowed.

Alternatively, the paging message may further include second time information for delaying returning the paging response message.

At S14, the RAN forwards the paging message. The paging message includes first indication information, and is used to indicate that delay in return of a paging response message is allowed.

Alternatively, the paging message may further include second time information for delaying returning the paging response message.

At S15, the terminal device determines whether to delay returning the paging response message according to the first indication information.

The specific implementation process may be seen from the related description of the foregoing embodiment, and details are not described herein again.

At S16, the AMF/SMF receives the paging response message returned by the terminal device before the timer expires (or is invalid), and if the AMF/SMF does not receive the paging response message returned by the terminal device before the timer expires, the AMF/SMF determines the paging failure.

The method embodiments of the present disclosure are described in detail below in conjunction with FIG. 2 to FIG. 5. The apparatus embodiments of the present disclosure are described in detail below with reference to FIG. 6 to FIG. 11. It is to be understood that the apparatus embodiments and the method embodiments correspond to each other. The similar description may be seen from the method embodiments.

FIG. 6 illustrates a schematic block diagram of a paging device 500 according to an embodiment of the present disclosure. As illustrated in FIG. 6, the device 500 includes a communication module 510 and a determination module 520.

The communication module 510 is configured to receive a paging message transmitted by an access network device. The paging message includes first indication information, and the first indication information is used to indicate that delay in return of a paging response message is allowed.

The determination module 520 is configured to determine whether to delay returning the paging response message according to a current link status.

Alternatively, in some embodiments, the determination module may further be configured to determine, in the case of determining to delay returning the paging response message, a delay time of the paging response message.

Alternatively, in some embodiments, the paging message may further include first time information for delaying returning the paging response message, and the determination module may specifically be configured to determine a delay time of the paging response message according to the first time information.

Alternatively, in some embodiments, the first time information may be used to indicate a maximum delay duration for delaying returning the paging response message and/or a latest specific time for returning the paging response message.

Alternatively, in some embodiments, the determination module may further be configured to determine a delay time of the paging response message according to second time information for delaying returning the paging response message, the second time information is configured by a core network device during network registration.

Alternatively, in some embodiments, the second time information is used to indicate a maximum delay duration for delaying returning the paging response message and/or a latest specific time for returning the paging response message.

Alternatively, in some embodiments, the communication module is further configured to:
report device type information to the core network device, the device type information being used to indicate that the terminal device is a terminal in a power saving mode or a terminal performing communication with a high delay; and
receive configuration information transmitted by the core network device, the configuration information being used to configure the terminal device with the second time information for delaying returning the paging response message.

Alternatively, in some embodiments, the core network device may be a CPF.

Alternatively, in some embodiments, the CPF may be an AMF or an SMF.

Alternatively, in some embodiments, the determination module may specifically be configured to determine to delay returning the paging response message when the current link quality is smaller than a preset threshold.

It is to be understood that, the paging device 500 according to the embodiment of the present disclosure may correspond to the terminal device in the method embodiment of the present disclosure, and the foregoing and other operations and/or functions of the respective units in the device 500 are respectively used to implement the corresponding process of the terminal device in the method 200 illustrated in FIG. 2 or the method 10 illustrated in FIG. 5, which will not be described here for brevity.

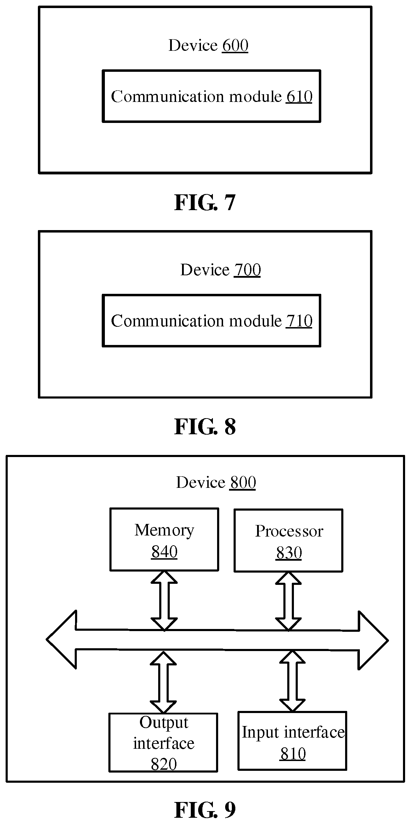

FIG. 7 illustrates a schematic diagram of a paging device according to an embodiment of the present disclosure. A device 600 in FIG. 7 includes a communication module 610.

The communication module 610 is configured to transmit a paging message to a terminal device. The paging message includes first indication information, and the first indication information is used to indicate that delay in return of a paging response message is allowed.

The communication module 610 is further configured to receive the paging response message returned by the terminal device.

Alternatively, in some embodiments, the paging message may further include first time information for delaying returning the paging response message.

Alternatively, in some embodiments, the first time information may be used to indicate a maximum delay duration for delaying returning the paging response message and/or a latest specific time for returning the paging response message.

Alternatively, in some embodiments, the communication module 610 may specifically be configured to receive the paging response message returned by the terminal device within a first duration or a first time. The first duration may be a maximum delay duration indicated by the first time information, or the first duration may be greater than the maximum delay duration indicated by the first time information. The first time may be the specific time indicated by the first time information, or the first time may be later than the specific time indicated by the first time information.

Alternatively, in some embodiments, the communication module 610 may further be configured to receive device type information reported by the terminal device during network registration, the device type information being used to indicate that the terminal device is a terminal in a power saving mode or a terminal performing communication with a high delay. And the communication module 610 may further be configured to configure the terminal device with second time information for delaying returning the paging response message.

Alternatively, in some embodiments, the second time information may be used to indicate a maximum delay duration for delaying returning the paging response message and/or a latest specific time for returning the paging response message.

Alternatively, in some embodiments, the communication module 610 may specifically be configured to receive the paging response message returned by the terminal device within a second duration or a second time. The second duration may be a maximum delay duration indicated by the second time information, or the second duration may be greater than the maximum delay duration indicated by the second time information. The second time may be the specific time indicated by the second time information, or the second time may be later than the specific time indicated by the second time information.

Alternatively, in some embodiments, the communication module 610 may be specifically configured to transmit the paging message to an access network device, and transmit the paging message to the terminal device through the access network device.

Alternatively, in some embodiments, the core network device may be a CPF, and the communication module 610 may further be configured to receive, by the core network device, second indication information transmitted by a UPF or a DSCP. The second indication information may be used to indicate arrival of downlink data and/or permission of delay in transmitting downlink data.

Alternatively, in some embodiments, the CPF may be an AMF or an SMF.

Specifically, the device 600 may correspond to (for example, may be configured in or may be) the core network device described in the foregoing method 300, and each module or unit in the device 600 may be configured to perform various operations or processes performed by the core network device in the foregoing method 300 or the method 10 illustrated in FIG. 5. Here, the detailed descriptions are omitted for avoiding redundancy.

FIG. 8 illustrates a schematic diagram of a paging device according to an embodiment of the present disclosure. The device 700 in FIG. 8 includes a communication module 710.

The communication module 710 is configured to receive a paging message transmitted by a core network device. The paging message includes first indication information, and the first indication information is used to indicate that delay in return of a paging response message is allowed. The communication module 710 is further configured to forward the paging message to a terminal device.

Alternatively, in some embodiments, the paging message may further include first time information for delaying returning the paging response message.

Alternatively, in some embodiments, the first time information may be used to indicate a maximum delay duration for delaying returning the paging response message and/or a latest specific time for returning the paging response message.

Alternatively, in some embodiments, the core network device may be a CPF.

Alternatively, in some embodiments, the CPF may be an AMF or an SMF.

Specifically, the device 700 may correspond to (for example, may be configured in or may be) the access network device described in the foregoing method embodiment, and each module or unit in the device 700 is configured to perform various operations or processes performed by the access network device in the foregoing method 400 or the method 10 illustrated in FIG. 5. Here, the detailed descriptions are omitted for avoiding redundancy.

As illustrated in FIG. 9, the embodiment of the present disclosure further provides a paging device 800. The device 800 may be the device 500 in FIG. 6, which can be configured to perform the operations of the terminal device corresponding to the method 200 illustrated in FIG. 2 or the method 10 illustrated in FIG. 5. The device 800 includes an input interface 810, an output interface 820, a processor 830, and a memory 840, and the input interface 810, the output interface 820, the processor 830, and the memory 840 may be connected by a bus system. The memory 840 is configured to store programs, instructions or codes. The processor 830 is configured to execute the programs, the instructions or the codes in the memory 840, so as to control the input interface 810 to receive signals, control the output interface 820 to transmit a signal, and complete the operations in the foregoing method embodiment.

It is to be understood that in the embodiments of the present disclosure, the processor 830 may be a Central Processing Unit (CPU), and the processor 830 may also be other general-purpose processors, a Digital Signal Processor (DSP), an Application Specific Integrated Circuit (ASIC), a Field Programmable Gate Array (FPGA) or other programmable logic devices, discrete gate or transistor logic devices, discrete hardware components, etc. The general-purpose processor may be a microprocessor, or the processor may be any conventional processor.

The memory 840 may include a Read-Only Memory (ROM) and a Random Access Memory (RAM) and provides instructions and data to the processor 830. A portion of the memory 840 may also include a non-volatile RAM. For example, the memory 840 may also store information of a device type.

In the implementation process, each operation of the above method may be completed by an integrated logic circuit of hardware in the processor 830 or instructions in the form of software. The operations of the method disclosed in the embodiment of the present disclosure may be directly implemented as a hardware processor, or may be performed by a combination of hardware and software modules in the processor. The software module may be located in a mature storage medium such as a RAM, a flash memory, a ROM, a programmable ROM or an electrically erasable programmable memory, and a register. The storage medium is located in the memory 840, and the processor 830 reads information in the memory 840 and completes the operations of the above method in combination with hardware thereof. To avoid repetition, no descriptions will be made herein.

In a specific implementation manner, the communication module 510 included in the device 500 in FIG. 6 may be implemented by using the output interface 820 and the input interface 810 in FIG. 9, and the determination module 520 included in the device 500 in FIG. 6 may be implemented by using the processor 830 in FIG. 9.

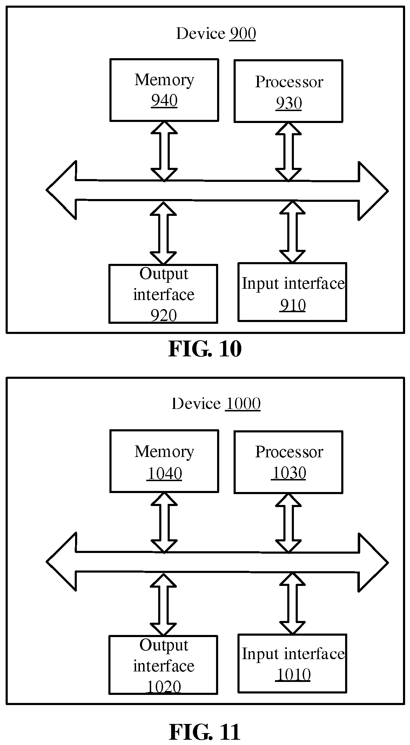

As illustrated in FIG. 10, the embodiment of the present disclosure further provides a paging device 900. The device 900 may be the device 600 in FIG. 7, which can be configured to perform the operations of the core network device corresponding to the method 300 illustrated in FIG. 3 or the method 10 illustrated in FIG. 5. The device 900 includes an input interface 910, an output interface 920, a processor 930, and a memory 940, and the input interface 910, the output interface 920, the processor 930, and the memory 940 may be connected by a bus system. The memory 940 is configured to store programs, instructions or codes. The processor 930 is configured to execute the programs, the instructions or the codes in the memory 940, so as to control the input interface 910 to receive a signal, control the output interface 920 to transmit a signal, and complete the operations in the foregoing method embodiment.

It is to be understood that in the embodiments of the present disclosure, the processor 930 may be a CPU, and the processor 930 may also be other general-purpose processors, a DSP, an ASIC, an FPGA or other programmable logic devices, discrete gate or transistor logic devices, discrete hardware components, etc. The general-purpose processor may be a microprocessor, or the processor may be any conventional processor.

The memory 940 may include a ROM and a RAM and provides instructions and data to the processor 930. A portion of the memory 940 may also include a non-volatile RAM. For example, the memory 940 may also store information of a device type.

In the implementation process, each operation of the above method may be completed by an integrated logic circuit of hardware in the processor 930 or an instruction in the form of software. The operations of the method disclosed in the embodiment of the present disclosure may be directly implemented as a hardware processor, or may be performed by a combination of hardware and software modules in the processor. The software module may be located in a mature storage medium such as a RAM, a flash memory, a ROM, a programmable ROM or an electrically erasable programmable memory, and a register. The storage medium is located in the memory 940, and the processor 930 reads information in the memory 940 and completes the operations of the above method in combination with hardware thereof. To avoid repetition, no descriptions will be made herein.

In a specific implementation manner, the communication module 610 included in the device 600 in FIG. 7 may be implemented by using the output interface 920 and the input interface 910 in FIG. 9.

As illustrated in FIG. 11, the embodiment of the present disclosure further provides a paging device 1000. The device 1000 may be the device 700 in FIG. 8, which can be configured to perform the operations of the access network device corresponding to the method 300 illustrated in FIG. 4 or the method 10 illustrated in FIG. 5. The device 1000 includes an input interface 1010, an output interface 1020, a processor 1030, and a memory 1040, and the input interface 1010, the output interface 1020, the processor 1030, and the memory 1040 may be connected by a bus system. The memory 1040 is configured to store programs, instructions or codes. The processor 1030 is configured to execute the programs, the instructions or the codes in the memory 1040, so as to control the input interface 1010 to receive signals, control the output interface 1020 to transmit signals, and complete the operations in the foregoing method embodiment.

It is to be understood that in the embodiments of the present disclosure, the processor 1030 may be a CPU, and the processor 1030 may also be other general-purpose processors, a DSP, an ASIC, an FPGA or other programmable logic devices, discrete gate or transistor logic devices, discrete hardware components, etc. The general-purpose processor may be a microprocessor, or the processor may be any conventional processor.

The memory 1040 may include a ROM and a RAM and provides instructions and data to the processor 1030. A portion of the memory 1040 may also include a non-volatile RAM. For example, the memory 1040 may also store information of a device type.

In the implementation process, each operation of the above method may be completed by an integrated logic circuit of hardware in the processor 1030 or an instruction in the form of software. The operations of the method disclosed in the embodiment of the present disclosure may be directly implemented as a hardware processor, or may be performed by a combination of hardware and software modules in the processor. The software module may be located in a mature storage medium such as a RAM, a flash memory, a ROM, a programmable ROM or an electrically erasable programmable memory, and a register. The storage medium is located in the memory 1040, and the processor 1030 reads information in the memory 1040 and completes the operations of the above method in combination with hardware thereof. To avoid repetition, no descriptions will be made herein.

In a specific implementation manner, the communication module 710 included in the device 700 in FIG. 8 may be implemented by using the output interface 1020 and the input interface 1010 in FIG. 10.

The embodiment of the present disclosure further provides a computer readable storage medium storing one or more programs, the one or more programs including instructions. The instruction enables, when being executed by a portable electronic device including multiple applications, the portable electronic device to perform the method of the embodiment illustrated in FIG. 2 to FIG. 5.

The embodiment of the present disclosure also proposes a computer program including instructions. When the computer program is executed by a computer, the computer may perform the corresponding flow of the method of the embodiment illustrated in FIG. 2 to FIG. 5.

Those of ordinary skill in the art will appreciate that the units and algorithm operations of various examples described in combination with the embodiments disclosed herein can be implemented in electronic hardware or a combination of computer software and electronic hardware. Whether these functions are performed in the form of hardware or software depends on specific application and design constraints of the technical solution. A person skilled in the art can use different methods for implementing the described functions for each particular application, but such implementation should not be considered to be beyond the scope of the present disclosure.

A person skilled in the art can clearly understand that for the convenience and brevity of the description, the specific working process of the system, the apparatus and the unit described above can be seen from the corresponding process in the foregoing method embodiment, and details are not described herein again.

In several embodiments provided by the present disclosure, it is to be understood that the disclosed system, apparatus and method may be implemented in other manners. For example, the apparatus embodiments described above are merely illustrative. For example, the division of the unit is only a logical function division. In actual implementation, there may be another division manner, for example, multiple units or components may be combined or integrated into another system, or some features may be ignored or not executed. In addition, the coupling or direct coupling or communication connection illustrated or discussed may be an indirect coupling or communication connection through some interfaces, apparatuses or units, and may be electrical, mechanical or otherwise.

The units described as separate components may or may not be physically separated, and the components displayed as units may or may not be physical units, that is, may be located in one place, or may be distributed to multiple network units. Some or all of the units may be selected according to actual needs to achieve the purpose of the solution of the present embodiment.

In addition, each functional unit in each embodiment of the present disclosure may be integrated into one processing unit, or each unit may exist physically separately, or two or more units may be integrated into one unit.

The functions may be stored in a computer-readable storage medium if being implemented in the form of a software functional unit and sold or used as a standalone product. Based on such understanding, the technical solution of the present disclosure, which is essential to the prior art or part of the technical solution, may be embodied in the form of a software product stored in a storage medium, including a plurality of instructions used to cause a computer device (which may be a personal computer, server, or network device, etc.) to perform all or part of the operations of the methods described in various embodiments of the present disclosure. The foregoing storage medium includes: a U disk, a mobile hard disk, a Read-Only Memory (ROM), a Random Access Memory (RAM), a magnetic disk, or an optical disk, and the like, which may store a program code.

The foregoing is only a specific implementation manner of the present disclosure, but the scope of protection of the present disclosure is not limited thereto. Therefore, the scope of protection of the present disclosure should be determined by the scope of the claims.

Examples in the description and/or drawings which are not covered by the claims are presented not as embodiments of the invention but as background art or examples.

## Claims

1. A paging method (200), comprising:
receiving (S210), by a terminal device, a paging message transmitted by an access network device, the paging message comprising first indication information, and the first indication information being used to indicate that delay in return of a paging response message is allowed; and
determining (S220), by the terminal device, whether to delay returning the paging response message according to a current link quality and a preset link quality threshold;
in a case of determining to delay returning the paging response message, determining, by the terminal device, the delay time of the paging response message according to second time information for delaying returning the paging response message, the second time information being configured by a core network device during network registration.

2. The method according to claim 1, wherein the second time information is used to indicate at least one of the following: a maximum delay duration for delaying returning the paging response message, or a latest specific time for returning the paging response message.

3. The method according to claim 1 or 2, further comprising:
reporting, by the terminal device, device type information to the core network device, the device type information being used to indicate that the terminal device is a terminal in a power saving mode or a terminal performing communication with a high delay; and
receiving, by the terminal device, configuration information transmitted by the core network device, the configuration information being used to configure the terminal device with the second time information for delaying returning the paging response message.

4. A paging device (500), comprising:
a communication module (510), configured to receive a paging message transmitted by an access network device, the paging message comprising first indication information, and the first indication information being used to indicate that delay in return of a paging response message is allowed; and
a determination module (520), configured to determine whether to delay returning the paging response message according to a current link quality and a preset link quality threshold,
wherein the determination module (520) is further configured to:
determine, in a case of determining to delay returning the paging response message, a delay time of the paging response message according to second time information for delaying returning the paging response message, the second time information being configured by a core network device during network registration.

5. The device according to claim 4, wherein the second time information is used to indicate at least one of the following: a maximum delay duration for delaying returning the paging response message, or a latest specific time for returning the paging response message.

6. The device according to claim 4 or 5, wherein the communication module (510) is further configured to:
report device type information to the core network device, the device type information being used to indicate that the terminal device is a terminal in a power saving mode or a terminal performing communication with a high delay; and
receive configuration information transmitted by the core network device, the configuration information being used to configure the terminal device with the second time information for delaying returning the paging response message.

7. The device according to any one of claims 4 to 6, wherein the core network device is a control plane function, CPF, wherein the CPF is an access and mobility management function, AMF, or a session management function, SMF.

8. The device according to any one of claims 4 to 7, wherein the determination module (520) is configured to:
determine to delay returning the paging response message, when the current link quality is smaller than the preset threshold.

## Patentansprüche

1. Paging-Verfahren (200), das Folgendes umfasst:
Empfangen (S210) durch eine Endgerätvorrichtung einer Paging-Nachricht, die von einer Zugangsnetzvorrichtung gesendet wird, wobei die Paging-Nachricht erste Angabeinformationen enthält und die ersten Angabeinformationen verwendet werden, um anzugeben, dass eine Verzögerung bei der Rückleitung der Paging-Antwortnachricht zulässig ist; und
Bestimmen (S220) durch die Endgerätvorrichtung, ob die Rückleitung der Paging-Antwortnachricht in Übereinstimmung mit einer aktuellen Verbindungsstreckenqualität und einem im Voraus festgelegten Verbindungsstreckenqualitäts-Schwellenwert verzögert werden soll;
falls bestimmt wird, die Rückleitung der Paging-Antwortnachricht zu verzögern, Bestimmen durch die Endgerätvorrichtung der Verzögerungszeit der Paging-Antwortnachricht in Übereinstimmung mit zweiten Zeitinformationen zum Verzögern der Rückleitung der Paging-Antwortnachricht, wobei die zweiten Zeitinformationen durch eine Kernnetzvorrichtung während der Netzregistrierung konfiguriert werden.

2. Verfahren nach Anspruch 1, wobei die zweiten Zeitinformationen verwendet werden, um eine maximale Verzögerungsdauer zum Verzögern der Rückleitung der Paging-Antwortnachricht und/oder eine späteste spezifische Zeit zum Rückleiten der Paging-Antwortnachricht anzugeben.

3. Verfahren nach Anspruch 1 oder 2, das ferner Folgendes umfasst:
Berichten durch die Endgerätvorrichtung von Vorrichtungstypinformationen für die Kernnetzvorrichtung, wobei die Vorrichtungstypinformationen verwendet werden, um anzugeben, dass die Endgerätvorrichtung ein Endgerät in einem Energiesparmodus oder ein Endgerät, das eine Kommunikation mit hoher Verzögerung ausführt, ist; und
Empfangen durch die Endgerätvorrichtung von Konfigurationsinformationen, die durch die Kernnetzvorrichtung gesendet werden, wobei die Konfigurationsinformationen verwendet werden, um die Endgerätvorrichtung mit den zweiten Zeitinformationen zum Verzögern des Rückleitens der Paging-Antwortnachricht zu konfigurieren.

4. Paging-Vorrichtung (500), die Folgendes umfasst:
ein Kommunikationsmodul (510), das konfiguriert ist, eine durch eine Zugangsnetzvorrichtung gesendete Paging-Nachricht zu empfangen, wobei die Paging-Nachricht erste Angabeinformationen enthält und wobei die ersten Angabeinformationen verwendet werden, um anzugeben, dass eine Verzögerung der Rückleitung einer Paging-Antwortnachricht zulässig ist; und
ein Bestimmungsmodul (520), das konfiguriert ist, in Übereinstimmung mit einer aktuellen Verbindungsstreckenqualität und einem im Voraus festgelegten Verbindungsstreckenqualitäts-Schwellenwert zu bestimmen, ob die Rückleitung der Paging-Antwortnachricht verzögert werden soll,
wobei das Bestimmungsmodul (520) ferner konfiguriert ist zum:
Bestimmen, falls bestimmt wird, die Rückleitung der Paging-Antwortnachricht zu verzögern, einer Verzögerungszeit der Paging-Antwortnachricht in Übereinstimmung mit zweiten Zeitinformationen zum Verzögern der Rückleitung der Paging-Antwortnachricht, wobei die zweiten Zeitinformationen durch eine Kernnetzvorrichtung während der Netzregistrierung konfiguriert werden.

5. Vorrichtung nach Anspruch 4, wobei die zweiten Zeitinformationen verwendet werden, um eine maximale Verzögerungsdauer zum Verzögern der Rückleitung der Paging-Antwortnachricht und/oder eine späteste spezifische Zeit zum Rückleiten der Paging-Antwortnachricht anzugeben.

6. Vorrichtung nach Anspruch 4 oder 5,
wobei das Kommunikationsmodul ferner konfiguriert ist zum:
Berichten von Vorrichtungstypinformationen zu der Kernnetzvorrichtung, wobei die Vorrichtungstypinformationen verwendet werden, um anzugeben, dass die Endgerätvorrichtung ein Endgerät in einem Energiesparmodus oder ein Endgerät, das eine Kommunikation mit einer hohen Verzögerung ausführt, ist; und
Empfangen von Konfigurationsinformationen, die durch die Kernnetzvorrichtung gesendet werden, wobei die Konfigurationsinformationen verwendet werden, um die Endgerätvorrichtung mit den zweiten Zeitinformationen zum Verzögern der Rückleitung der Paging-Antwortnachricht zu konfigurieren.

7. Vorrichtung nach einem der Ansprüche 4 bis 6,
wobei die Kernnetzvorrichtung eine Steuerebenenfunktion, CPF, ist, wobei die CPF eine Zugriffs- und Mobilitätsmanagementfunktion, AMF, oder eine Sitzungsmanagementfunktion, SMF, ist.

8. Vorrichtung nach einem der Ansprüche 4 bis 7,
wobei das Bestimmungsmodul (520) konfiguriert ist zum:
Bestimmen, die Rückleitung der Paging-Antwortnachricht zu verzögern, wenn die aktuelle Verbindungsstreckenqualität niedriger als der im Voraus festgelegte Schwellenwert ist.

## Revendications

1. Procédé (200) de radiomessagerie, comportant :
la réception (S210), par un dispositif terminal, d'un message de radiomessagerie émis par un dispositif de réseau d'accès, le message de radiomessagerie comportant des premières informations d'indication, et les premières informations d'indication étant utilisées pour indiquer qu'un retard dans le renvoi d'un message de réponse de radiomessagerie est autorisé ; et
une détermination (S220), par le dispositif terminal, selon laquelle il convient ou non de retarder le renvoi du message de réponse de radiomessagerie en fonction d'une qualité actuelle de liaison et d'un seuil préétabli de qualité de liaison ;
dans un cas où il est déterminé qu'il convient de retarder le renvoi du message de réponse de radiomessagerie, la détermination, par le dispositif terminal, du temps de retard du message de réponse de radiomessagerie selon des secondes informations de temps servant à retarder le renvoi du message de réponse de radiomessagerie, les secondes informations de temps étant configurées par un dispositif de réseau central pendant l'inscription du réseau.

2. Procédé selon la revendication 1, les secondes informations de temps étant utilisées pour indiquer au moins une des informations suivantes : une durée de retard maximum pour retarder le renvoi du message de réponse de radiomessagerie, ou un instant spécifique le plus tardif pour renvoyer le message de réponse de radiomessagerie.

3. Procédé selon la revendication 1 ou 2, comportant en outre :
un signalement, par le dispositif terminal, d'informations de type de dispositif au dispositif de réseau central, les informations de type de dispositif étant utilisées pour indiquer que le dispositif terminal est un terminal dans un mode d'économie d'énergie ou un terminal effectuant une communication avec un retard important ; et
la réception, par le dispositif terminal, d'informations de configuration émises par le dispositif de réseau central, les informations de configuration étant utilisées pour configurer le dispositif terminal avec les secondes informations de temps servant à retarder le renvoi du message de réponse de radiomessagerie.

4. Dispositif (500) de radiomessagerie, comportant :
un module (510) de communication, configuré pour recevoir un message de radiomessagerie émis par un dispositif de réseau d'accès, le message de radiomessagerie comportant des premières informations d'indication, et les premières informations d'indication étant utilisées pour indiquer qu'un retard dans le renvoi d'un message de réponse de radiomessagerie est autorisé ; et
un module (520) de détermination, configuré pour déterminer s'il convient de retarder le renvoi du message de réponse de radiomessagerie en fonction d'une qualité actuelle de liaison et d'un seuil préétabli de qualité de liaison,
le module (520) de détermination étant en outre configuré pour :
déterminer, dans un cas où il est déterminé qu'il convient de retarder le renvoi du message de réponse de radiomessagerie, un temps de retard du message de réponse de radiomessagerie selon des secondes informations de temps servant à retarder le renvoi du message de réponse de radiomessagerie, les secondes informations de temps étant configurées par un dispositif de réseau central pendant l'inscription du réseau.

5. Dispositif selon la revendication 4, les secondes informations de temps étant utilisées pour indiquer au moins une des informations suivantes : une durée de retard maximum pour retarder le renvoi du message de réponse de radiomessagerie, ou un instant spécifique le plus tardif pour renvoyer le message de réponse de radiomessagerie.

6. Dispositif selon la revendication 4 ou 5, le module (510) de communication étant en outre configuré pour :
signaler des informations de type de dispositif au dispositif de réseau central, les informations de type de dispositif étant utilisées pour indiquer que le dispositif terminal est un terminal dans un mode d'économie d'énergie ou un terminal effectuant une communication avec un retard important ; et
recevoir des informations de configuration émises par le dispositif de réseau central, les informations de configuration étant utilisées pour configurer le dispositif terminal avec les secondes informations de temps servant à retarder le renvoi du message de réponse de radiomessagerie.

7. Dispositif selon l'une quelconque des revendications 4 à 6, le dispositif de réseau central étant une fonction de plan de commande, CPF, la CPF étant une fonction de gestion d'accès et de mobilité, AMF, ou une fonction de gestion de session, SMF.

8. Dispositif selon l'une quelconque des revendications 4 à 7, le module (520) de détermination étant configuré pour :
déterminer qu'il convient de retarder le renvoi du message de réponse de radiomessagerie, lorsque la qualité actuelle de liaison est inférieure au seuil préétabli.
